# EUROPEAN PATENT APPLICATION

(11) **EP 1 351 186 A2**
(43) Date of publication of application: **08.10.2003**
(21) Application number: 03251953.0
(22) Date of filing: 27.03.2003
(51) Int. Cl.: G06K 17/00, G06K 7/10

(54) **Data transfer system**

(30) Priority: 03.04.2002 GB 0207792
(71) Applicant: Daniels, Steven, Somerset BA11 2HQ (GB)
(72) Inventor: Daniels, Steven, Somerset BA11 2HQ (GB)
(74) Representative: Strachan, Victoria Jane

(57) **Abstract**

A data transfer system comprising a data input or scanning unit (26) having sufficient memory capacity (either integrally or in separate module) to store a plurality of data items relating, for example, to goods required to be ordered from a retailer. In use, the user enters the data representative of a number of goods required to be purchased from a retailer (by scanning their respective bar codes 30 in a catalogue 28 or the like) and, when their particular 'shopping list' is complete, downloads data items into an e-mailing unit (provided in a personal computer or otherwise) where the data items are converted to format suitable for e-mail transmission across en electronic data communication transmission network, and transmitted to the retailer for dispatch.

## Description

This invention relates to a data transfer system and, more particularly, to a data reading and transfer system for acquiring, collating and transmitting data to a remote location across an electronic data communication network, such as a telephone communication network or the like.

Home shopping via the Internet is becoming increasingly popular, whereby a potential customer accesses a retailer's website and orders goods offered thereon by filling a virtual 'shopping trolley' and transmitting details of the goods in the shopping trolley via e-mail to the retailer. The e-mail transmitted to the retailer is essentially a 'shopping list', and the items on the list are collected together by the retailer and dispatched to the customer via mail or by hand.

Although this method of ordering goods is very convenient, there are a number of disadvantages associated with it. Firstly, this type of home shopping is only available to customers having access to the Internet and, for those who pay for their Internet access based on the time spent on-line, this can be a very expensive means of shopping as it can take some time to browse through the goods on offer and make their choice(s). Further, there is often only a limited selection of goods available vie this type of home shopping because the retailer's website provides limited capacity for displaying all goods available therefrom. This is particularly disadvantageous when purchasing groceries via the Internet as only a relatively small selection of all the goods potentially available from the retailer can be displayed. Still further, where a large number of goods are required to be ordered/purchased at one time (as in the case of grocery shopping and the like), the above-mentioned procedure must be followed for each item during a single on-line session, which is time consuming, may be expensive and may also result in some required items being inadvertently omitted from the order.

I have devised an arrangement which seeks to overcome the above-mentioned problems and provide convenient home shopping ability to anyone who requires it, even those without a personal computer.

In accordance with a first aspect of the present invention, there is provided data transfer apparatus comprising a (preferably portable) data input or scanning device having means housed in a single hand-held unit for scanning and storing a plurality of data items, and data transmission means for transmitting said plurality of data items to a remote location via an electronic data communication network, said data input or scanning means comprising means for transferring said one or more data items to said data transmission means, and said data transfer apparatus comprising means for converting said plurality of data items to a format suitable for transmission across said telephone communication network.

Thus, the first aspect of the present invention provides a portable hand-held data input unit or scanner, such as a pen or wand scanner, which has the ability to store a plurality of data items. Accordingly, a potential customer can scan details of a list of goods required to be purchased from, for example, a catalogue provided by the retailer, before downloading the list to the data transmission means for transmission to the retailer.

In accordance with a second aspect of the present invention, there is provided ordering apparatus for ordering goods and/or services from a location remote from the location of said ordering apparatus, said ordering apparatus comprising portable data input or scanning means for scanning from an external source data representative of one or more goods and/or services to be ordered, data transmission means for transmitting data representative of said one or more goods and/or services to be ordered to said remote location via an electronic data communication network, means for transferring said data representative of said one or more goods and/or services to be ordered from said data input or scanning means to said data transmission means and means for converting said representative data to a format suitable for transmission across said electronic data communication network.

Thus, the second aspect of the present invention provides a home shopping apparatus comprising a portable scanner and data transmission means, the scanner enabling all goods available for order to be collated in a catalogue or the like (rather than the limited selection available on a website) for perusal at the customer's leisure before creating a list of goods required for transmission to the retailer.

Also in accordance with the second aspect of the present invention, there is provided a method of ordering goods and/or services from a first location to be provided from a second location remote from said first location, the method comprising the steps of using portable data input or scanning means to scan from an external source at said first location data representative of one or more goods and/or services to be ordered, transferring said data representative of said one or more goods and/or services to be ordered from said data scanning means to data transmission means adapted to transmit data to said second location via an electronic data communication network, converting said representative data to a format suitable for transmission across said electronic data communication network, and transmitting data representative of said one or more goods and/or services to be ordered to said second location by means of said data transmission means.

In accordance with a third aspect of the present invention, there is provided data transfer apparatus comprising in combination a hand-held data input unit or scanner for inputting or scanning one or more data items and data transmission means provided in a unit other than a personal computer, such as a telephone or television device, the apparatus further comprising means for transferring said one or more data items from said data input unit or scanner to said data transmission means for transmission thereby of said one or more data items across an electronic data transmission network.

The apparatus of the third aspect of the present invention simply provides in combination a hand-held data scanner with an e-mailing (or similar) device provided in a unit other than a personal computer, such as a telephone (as in the Amstrad Emailer) or a television (as in the emailing service provided by Sky Digital).

Thus, in its broadest sense, the first object of the present invention is to provide a portable scanning device for use with an e-mailing device provided in a unit other than a personal computer, and the second object of the present invention is to provide a method and apparatus for home shopping whereby data representative of goods required to be ordered can be scanned from an external source and transmitted to the goods supplier for dispatch.

One particular aspect of the present invention relates to a data transfer system comprising a data input or scanning unit having sufficient memory capacity (either integrally or in separate module) to store a plurality of data items relating, for example, to goods required to be ordered from a retailer. In use, the user enters the data representative of a number of goods required to be purchased from a retailer (by scanning, for example, their respective bar codes, text representative of the goods, numerical codes, or any other data representative of the goods, from a catalogue or the like) and, when their particular 'shopping list' is complete, downloads data items into an e-mailing unit (10) (provided in a personal computer or otherwise) where the data items are converted to format suitable for e-mail transmission across en electronic data communication transmission network, and transmitted to the retailer for dispatch.

In a preferred embodiment, the present invention relates to the use of a portable pen (or wand) scanner (preferably, but not necessarily, cordless) with a relatively large memory capacity in conjunction with a catalogue or directory (in which items available for order may be represented by individual bar codes or other encoded data items) and data transmission means. In the case where the data transmission means comprises an e-mailer provided in a unit other than a personal computer, such as a television or telephone unit, the apparatus would enable people without a personal computer to take advantage of the home shopping facilities currently available. Those with a personal computer can, however, take advantage of the invention in the sense that the 'shopping list' which may be collated within the scanner unit memory may be downloaded to the personal computer for transmission via e-mail to the goods/services provider. The advantage of the present invention, in this case, is that the customer can browse through the catalogue/directory at their own pace and collate a list of everything they want before going on-line. Further, the provision of a catalogue enables the retailer to provide details of substantially more goods than it would otherwise be possible to provide on their website.

Each different goods/service provider could, of course, produce their own catalogue, with the scanning unit of the present invention being able to scan the data representative of items required to be ordered in any one of a number of catalogues, as required.

In a first exemplary embodiment of the present invention, the data input (or scanning) unit includes an integral memory for storing a plurality of data items. However, in an alternative exemplary embodiment, the apparatus may comprise a storage module (or 'PDA' separate from, but in communication with (wireless or otherwise), with the data input or scanning unit. In either case, the data items may be transferred to the data transmission means via a wireless or hard-wired communication link. In one specific exemplary embodiment of the invention, the data transmission means may include a docking station into which the scanning or data input unit itself, or the storage module or PDA, may be plugged.

An embodiment of the present invention will now be described by way of example only and with reference to the accompanying drawings, in which:
Figure 1 is a perspective view of a telephone unit having means for enabling a user to send and receive e-mail messages and the like;
Figure 2 is a schematic perspective view of a pen scanner for use with the telephone unit of Figure 1 in accordance with an exemplary embodiment of the present invention; and
Figure 3 is a schematic view of a catalogue for use with an exemplary embodiment of the present invention.

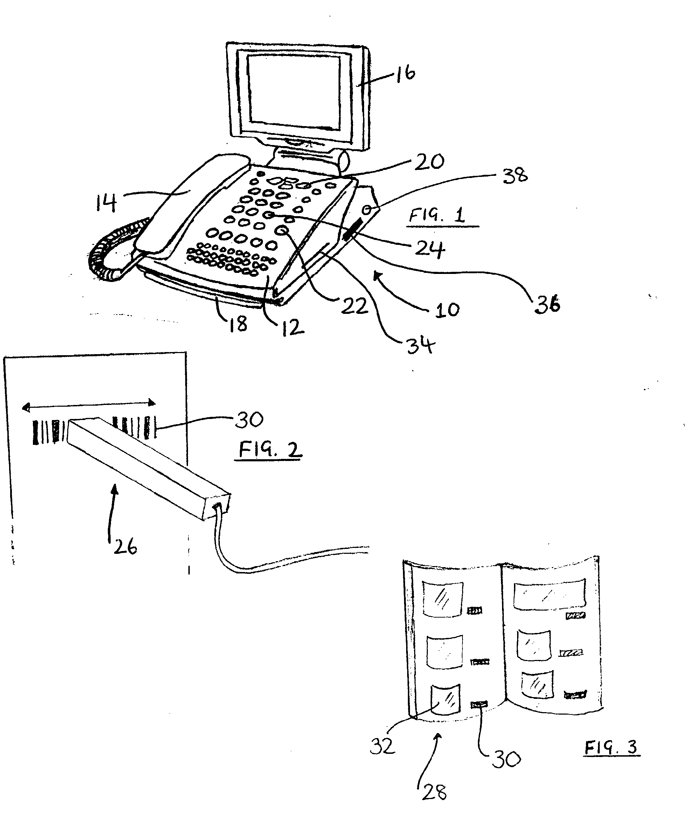

Referring to Figure 1 of the drawings, a telephone unit 10 comprises a base unit 12 and a telephone handset 14. The unit 10 further comprises a display screen 16 and, optionally, a keypad 18 which is slidably mounted beneath the unit 10. Cursor keys 20 and a 'send' button 22 are provided on the base unit 12, together with standard telephone number keys 24. In use, conventionally, the user can type in the required wording of an e-mail by means of the keypad 18 and the content of the e-mail will be displayed on the screen 16. The user, once satisfied with the wording of the e-mail, can then send the e-mail to the desired recipient by pressing the 'send' button 22 which causes the e-mail to be transmitted to the specified recipient via the telephone communication network to which the telephone unit is connected.

Referring to Figures 2 and 3 of the drawings, in the case of this exemplary embodiment of the present invention, there is provided a portable scanning unit 26 which includes a memory and power supply (not shown), either integrally or in a separate unit with which it is in communication. The scanning unit 26 can be used in conjunction with a catalogue 28 provided by a goods provider. The catalogue 28 contains details of all goods available to order by the customer and beside each item is provided a bar code 30 representative of the respective item 32.

When the customer decides to order an item 3 2 from the catalogue 2 8, he employs the scanning unit 26 to scan the bar code 30 for that item such that the data represented by the bar code 30 is entered in the scanner memory (not shown). The scanner 26 may include a decoding module which decodes the bar code data, but it is more preferable to provide such decoding means in the e-mailing unit itself so as to minimise the size of the scanner 26. The scanner memory has the capacity to store a large number of data items relating to respective goods required to be ordered by the customer, such that it may eventually hold a so-called 'shopping' list of goods.

When the customer is ready to order the goods required (say, for example, at the end of each week in the case of groceries and similar consumer goods), the data items stored in the scanner memory are transferred to the telephone unit 10. In a preferred embodiment of the invention, the telephone unit 10 includes means for decoding the data items and converting them to HTML format for transmission via e-mail across the telephone line to which it is connected. Thus, the data items are turned into an e-mail addressed to the retailer listing all of the goods required by the customer. The shopping list may then be displayed on the screen 16 for viewing/printing by the user, before he presses the 'send' button 22 and sends the e-mail to the retailer as an order.

The telephone unit 10 further includes a credit card (or 'Smartcard') reader 34 so that the user can pay the retailer for their order via the same telephone connection. However, this is not essential, as the customer may simply have an account with the retailer which is paid at an agreed time via an agreed method, whether electronic or otherwise.

The telephone unit 10 has the ability to receive software downloads across the telephone line to which it is connected such that, if the unit 10 requires additional software to handle certain transactions or support the scanner being used, this can be easily achieved without the user being required to purchase additional equipment.

One known telephone/e-mailing unit includes a portable address book and calculator (or 'PDA') for use with the telephone unit 10. Thus, conventionally, the user enters any required name/address information into the address book, which information can be transferred to the telephone unit's memory when the address book/calculator is plugged into the docking station 36 at the side of the unit 10. In accordance with an exemplary embodiment of the present invention, this function could be extended, such that the scanning unit 26 works in conjunction with the PDA and data items scanned thereby are stored in the PDA for eventual transfer to the telephone unit 10 for transmission to the retailer. Alternatively, of course, the scanner unit 26 may have its own memory for storing the data items, which data items can eventually be downloaded to the telephone unit 10 for transmission, either by means of a hard wire connection port 38 on the telephone unit, or by means of a cordless or wireless connection (such as radio frequency transmission or the like).

An exemplary embodiment of the present invention has been described above by way of example only and it will be apparent to a person skilled in the art that modifications and variations can be made without departing from the scope of the invention as defined in the appended claims.

## Claims

1. Data transfer apparatus comprising a data input or scanning device having means housed in a single, hand-held unit for scanning (or inputting) and storing a plurality of data items, and data transmission means for transmitting said plurality of data items to a remote location via an electronic data communication network, said data input or scanning means comprising means for transferring said one or more data items to said data transmission means, and said data transfer apparatus comprising means for converting said plurality of data items to a format suitable for transmission across said telephone communication network.

2. Apparatus according to claim 1, wherein said data input or scanning unit includes an integral memory for storing said plurality of data items; and/or wherein said data transfer apparatus comprises a storage module, separate from but in communication with, said scanning unit, whereby said data items scanned by said scanning unit are stored in said storage module; and optionally wherein said data input scanning unit and said storage module are in wireless or hard wired communication with each other.

3. Apparatus according to claim 1 or claim 2, wherein said data items are transferred to said data transmission means via a wireless or hard-wired communication channel; and/or wherein said means for converting said data items is provided in said scanning unit, said storage module or said data transmission means.

4. Apparatus according to any one of the preceding claims, wherein said data transmission means is provided in a unit other than a personal computer.

5. Apparatus according to any one of the preceding claims, comprising goods and/or services ordering apparatus.

6. Apparatus according to any one of the preceding claims, wherein said scanning unit obtains data items selected by a user from a catalogue or the like, which catalogue contains details of goods and/or services available for sale/hire; and/or wherein each of said goods/services are represented by a bar code or the like for scanning by said scanning unit.

7. Apparatus according to any one of the preceding claims, wherein said data input or scanning unit comprises a pen or wand scanning device.

8. Ordering apparatus for ordering goods and/or services from a location remote from the location of said ordering apparatus, said ordering apparatus comprising data scanning means for scanning from an external source data representative of one or more goods and/or services to be ordered, data transmission means for transmitting data representative of said one or more goods and/or services to be ordered to said remote location via an electronic data communication network, means for transferring said data representative of said one or more goods and/or services to be ordered from said data scanning means to said data transmission means and means for converting said representative data to a format suitable for transmission across said electronic data communication network.

9. Data transfer apparatus comprising in combination a hand-held scanner for scanning one or more data items and data transmission means provided in a unit other than a personal computer, such as a telephone or television device, the apparatus further comprising means for transferring said one or more data items from said scanner to said data transmission means for transmission thereby of said one or more data items across an electronic data transmission network.

10. A method of ordering goods and/or services from a first location to be provided from a second location remote from said first location, the method comprising the steps of using data scanning means to scan from an external source at said first location data representative of one or more goods and/or services to be ordered, transferring said data representative of said one or more goods and/or services to be ordered from said data scanning means to data transmission means adapted to transmit data to said second location via an electronic data communication network, converting said representative data to a format suitable for transmission across said electronic data communication network, and transmitting data representative of said one or more goods and/or services to be ordered to said second location by means of said data transmission means.
